# EUROPÄISCHE PATENTSCHRIFT

(11) **EP 2 717 434 B1**
(45) Veröffentlichungstag und Bekanntmachung des Hinweises auf die Patenterteilung: **20.12.2017**
(21) Anmeldenummer: 12187570.2
(22) Anmeldetag: 08.10.2012
(51) Int. Cl.: H02K 3/38

(54) **Abstandshalter zur Stabilisierung und Isolierung eines Wicklungskopfes**
Spacer for stabilising and insulation of a winding head
Pièce intercalaire pour stabiliser et isoler une tête de bobine

(43) Veröffentlichungstag der Anmeldung: 09.04.2014
(73) Patentinhaber: ETEL S.A., 2112 Môtiers (CH)
(72) Erfinder: Mougin, Guillaume, 25140 Charquemont (FR); Dehouck, Christophe, 25300 Doubs (FR); Panet, David, 2000 Neuchatel (CH)
(74) Vertreter: Pleyer, Hans Anno

(56) Entgegenhaltungen:
- GB-A- 2 288 920
- US-A- 3 457 442
- US-A- 3 575 623
- US-A- 6 043 584

## Beschreibung

Die vorliegende Erfindung betrifft einen Abstandshalter zur mechanischen Stabilisierung und elektrischen Isolierung eines Wicklungskopfes in einem Elektromotor, sowie einen Elektromotor mit einem solchen Abstandshalter.

Die US 5642013 beschreibt ausführlich permanent erregte Synchronmotoren. Neben einem bestimmten Verhältnis zwischen dem Abstand der Zähne des Primärteils und dem Abstand der Magnete des Sekundärteils, das zu einem reduzierten Rastmoment führt, sind vor allem die geraden Zahnflanken vorteilhaft. Diese erlauben es, die Spulen des Primärteils vorgefertigt auf die einzelnen Zähne des Primärteils aufzuschieben. Hierbei ist auf eine gute Isolierung der Spulen gegenüber den Zähnen des Eisenkerns sowie zum Luftspalt des Motors hin zu achten.

Es ist bekannt, die Zahnzwischenräume (also die Nuten des Eisenkerns) mit einem isolierenden Papier auszukleiden, bzw. die geraden Bereiche der Spulen mit einem solchen Papier zu umwickeln. Die seitlich aus dem Eisenkern heraus ragenden Wicklungsköpfe der Spulen werden zur mechanischen Stabilisierung und elektrischen Isolierung mit einer Vergussmasse (Kunstharz) umhüllt. Es ist auch bekannt, in die von einem Wicklungskopf und einem Zahn gebildete Öffnung einen elastischen Abstandshalter mit einem sich verjüngenden, freien Ende zu pressen, der einerseits dem Wicklungskopf zusätzliche mechanische Stabilität verleiht, andererseits aber auch für eine elektrische Isolierung zwischen Wicklungskopf und Zahn sorgt. Dies ist in diesem Bereich besonders wichtig, da sich im gekrümmten Bereich der Spule ein isolierendes Papier nur schlecht einbringen lässt. Durch den Einsatz solcher Abstandhalter an den beiden gegenüberliegenden Wicklungsköpfen einer Spule wird die Spule außerdem um den Zahn zentriert und fixiert.

Aus der US 6043584 und auch aus der US 3575623 sind Isolatoren bekannt, die zur Isolierung von Wicklungsköpfen unterschiedlicher Phasen dienen, die sich sonst gegenseitig berühren würden. Diese Isolatoren weisen flächige, der Isolation dienende Bereiche auf, und daran angeformte schmalere Bereiche, die der Befestigung an den Wicklungsköpfen dienen.

Zur besseren Isolation der Wicklungsköpfe zum Luftspalt des Motors hin ist es bekannt, einen Bogen aus einem isolierenden Material vor die Wicklungsköpfe zu setzen, der anschließend zusammen mit den Wicklungsköpfen mit einem Harz vergossen wird.

Der Fertigungsprozess für einen solchen Motor, und insbesondere die mechanische Stabilisierung und elektrische Isolierung der Wicklungsköpfe, ist damit relativ aufwändig.

Aufgabe der Erfindung ist es daher, diesen Fertigungsprozess zu vereinfachen, insbesondere durch einen neuartigen Abstandshalter für die Wicklungsköpfe eines solchen Motors.

Diese Aufgabe wird gelöst durch einen Elektromotor nach Anspruch 1.

Es wird ein Abstandshalter zur mechanischen Stabilisierung und elektrischen Isolierung eines Wicklungskopfes in einem Elektromotor offenbart, der eine elastische Nase mit einem freien Ende aufweist. An einem dem freien Ende gegenüberliegenden Ende der Nase ist ein flächiges, elektrisch isolierendes Blatt angeformt.

Solche Abstandshalter werden in einem Elektromotor mit einem Eisenkern eingesetzt, dessen Zähne von Spulen umgeben sind, deren Wicklungsköpfe seitlich aus dem Eisenkern ragen. Die Abstandshalter sind in durch die Wicklungsköpfe und die Zähne gebildete Öffnungen eingepresst, so dass die Wicklungsköpfe zu einem Luftspalt des Elektromotors hin jeweils vom Blatt des eingepressten Abstandshalters abgedeckt sind.

Durch den Einsatz der erfindungsgemäß ausgestalteten Abstandshalter werden die Spulen des Elektromotors in einem einzigen Arbeitsschritt mechanisch stabilisiert und elektrisch isoliert, und zwar auch in Richtung des Luftspalts des Elektromotors.

Weitere Vorteile sowie Einzelheiten der vorliegenden Erfindung ergeben sich aus der nachfolgenden Beschreibung einer bevorzugten Ausführungsform anhand der Figuren. Dabei zeigt
- Figur 1: einen Schnitt durch einen Abstandhalter,
- Figur 2: eine Vorderansicht des Abstandshalters der Figur 1,
- Figur 3: eine Draufsicht auf den Abstandshalter der Figur 1,
- Figur 4: ein Primärteil eines Elektromotors.

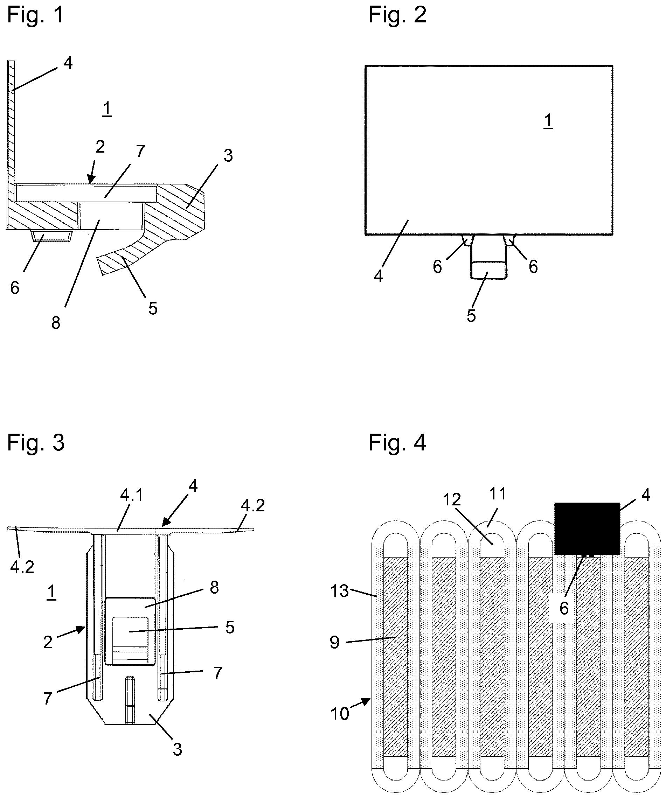

Die Figuren 1 bis 3 zeigen ein Ausführungsbeispiel eines erfindungsgemäßen Abstandhalters 1 in verschiedenen Ansichten. Die Figur 1 zeigt in einer Seitenansicht einen Schnitt durch den Abstandshalter 1. Die Schnittebene verläuft dabei durch die Nase 2 des Abstandshalters 1. Der Abstandshalter 1 ist zu dieser Schnittebene symmetrisch. Die Figur 2 zeigt eine Vorderansicht auf das Blatt 4 des Abstandshalters 1, die Figur 3 ist eine Draufsicht auf den Abstandshalter 1.

Man erkennt in den Figuren 1 - 3 die elastische, sich zu ihrem freien Ende 3 hin verjüngende Nase 2, mit der der Abstandshalter 1 später in den Wicklungskopf eines Elektromotors geschoben wird. Die am freien Ende 3 erkennbaren Abschrägungen helfen beim Einführen. An einem dem freien Ende 3 gegenüberliegenden Ende der Nase 2 ist ein flächiges, elektrisch isolierendes Blatt 4 angeformt.

Der Abstandshalter 1 ist einstückig und als Spritzgussteil ausgebildet. Er besteht aus einem Polyamid, das einerseits gute elektrisch isolierende Eigenschaften aufweist, und andererseits eine gewisse Elastizität gewährleistet.

Um die Elastizität dieses Materials zu unterstützen, weist die Nase 2 an ihrer Unterseite eine abstehende, federnde Lasche 5 auf, die beim Einpressen des Abstandshalters 1 zur Nase 2 hin gebogen wird, und die den Abstandshalter 1 durch ihre Federkraft im Wicklungskopf des Elektromotors festhält.

Die Nase 2 weist außerdem an ihrer Unterseite und an ihrer Oberseite Stege 6 bzw. 7 auf. Die Stege 6 begrenzen die Kompression der Lasche 5, denn wenn beim Einpressen der Nase 2 in den Wicklungskopf die Stege 6 mit dem Eisenkern bzw. Wicklungskopf in Berührung kommen, wird die Lasche 5 nicht weiter komprimiert. Ein Abbrechen der Lasche 5 wird so vermieden.

Zusammen mit einer Durchtrittsöffnung 8 in der Nase 2, die die Unterseite der Nase 2 mit deren Oberseite verbindet, sorgen die Stege 6, 7 außerdem dafür, dass bei einem späteren Vergießen des Primärteils mit einem Harz, dieses Harz auch in die Öffnungen der Wicklungsköpfe 11 eindringen und die Nase 2 umfließen kann. So wird vermieden, dass sich in der elektrischen Isolierung des Motors Luftblasen bilden können. Solche Luftblasen sind sehr nachteilig, da Luft mit einer Durchschlagfestigkeit von 3 kV/mm wesentlich schlechter isoliert als ein üblicherweise zum Vergießen eines Motors verwendetes Epoxidharz mit 19 kV/mm.

Wie man insbesondere der Figur 3 entnehmen kann, ist das Blatt 4 in einem mittleren, die Nase 2 aufweisenden Bereich 4.1 dicker als in seinen Randbereichen 4.2. Die Randbereiche 4.2 weisen außerdem eine kontinuierlich zum Rand hin abnehmende Dicke auf. Ein so ausgestaltetes Blatt 4 weist einerseits die im Bereich der Nase 2 erforderliche Stabilität auf, und ist andererseits so flexibel, dass es sich an unterschiedliche Radien von rotatorischen Elektromotoren anpassen kann. Besonders bewährt haben sich Blätter 4, deren mittlerer Bereich 4.1 ca. 0,5 - 1 mm stark ist, während die Dicke des Blattes bis zum Rand auf 0,1 - 0,2 mm abnimmt.

Das Blatt 4 ist zudem auf der der Nase 2 abgewandten Seite aufgeraut, im Ausführungsbeispiel mit einer Charmilles - Rauheitskennzahl von 38. So wird beim späteren Vergießen des Motors mit Harz eine bessere Haftung zwischen dem Harz und dem Blatt 4 erreicht. Dies ist wichtig, da die Harzschicht an dieser dem Luftspalt des Motors zugewandten Seite nur sehr dünn ist.

Die Figur 4 zeigt schließlich eine Ansicht eines Primärteils eines Elektromotors, wie er einleitend beschrieben wurde. Man erkennt die Zähne 9 eines Eisenkerns, die von Spulen 10 umwickelt sind. Wicklungsköpfe 11 ragen seitlich aus dem Eisenkern und bilden so Öffnungen 12, in die die Abstandshalter 1 eingesetzt werden.

Die geraden, zwischen den Zähnen 9 liegenden Bereiche der Spulen 10 sind mit einem isolierenden Papier 13 umwickelt. Die Wicklungsköpfe 11 lassen sich so aber nicht gut isolieren. Diese Aufgabe übernehmen daher die Abstandshalter 1, von denen in der Figur 4 einer im eingesetzten Zustand gezeigt ist. Neben dem Blatt 4, das nun einen Wicklungskopf 11 zum Luftspalt des Elektromotors hin isoliert, erkennt man noch die beiden Stege 6 an der Unterseite der Nase 2. Diese Stege 6 sorgen dafür, dass beim Vergießen des Motors Harz unterhalb des Blattes 4 in die Öffnung 12 eindringen und die Nase 2 umfließen kann. Somit ist die Nase 2 nach dem Vergießen in Harz eingebettet, das Harz befindet sich zwischen den Stegen 6 bzw. 7 und in der Durchtrittsöffnung 8 der Nase 2.

Wie man der Figur 4 leicht entnehmen kann, überlappen sich außerdem die Blätter 4 von benachbarten Abstandshaltern 1, so dass eine Isolierung der Wicklungsköpfe 11 zum Luftspalt des Motors hin sichergestellt ist.

Wegen der Überlappung der Blätter 4 und deren Flexibilität, können solche Abstandshalter 1 für unterschiedliche Motorgeometrien eingesetzt werden, ohne dass für jeden Motortyp eigene Abstandshalter hergestellt werden müssen. Die Abstandshalter 1 eigenen sich für Linearmotoren ebenso wie für rotatorische Motoren mit unterschiedlichen Radien.

## Patentansprüche

1. Elektromotor mit einem Eisenkern, dessen Zähne (9) von Spulen (10) umgeben sind, deren Wicklungsköpfe (11) seitlich aus dem Eisenkern ragen, aufweisend Abstandshalter (1) mit einer elastischen Nase (2) mit einem freien Ende (3) zur mechanischen Stabilisierung und elektrischen Isolierung der Wicklungsköpfe (11), wobei an einem dem freien Ende (3) gegenüberliegenden Ende der Nase (2) ein flächiges, elektrisch isolierendes Blatt (4) angeformt ist, wobei die Nasen (2) in durch die Wicklungsköpfe (11) und die Zähne (9) gebildete Öffnungen (12) eingepresst sind, **gekennzeichnet dadurch, dass** die Wicklungsköpfe (11) zu einem Luftspalt des Elektromotors hin jeweils vom Blatt (4) des eingepressten Abstandshalters (1) abgedeckt sind, und dass die Nase (2) eine abstehende , federnde Lasche (5) aufweist.

2. Elektromotor nach Anspruch 1, **dadurch gekennzeichnet, dass** sich die Blätter (4) zweier benachbarter Abstandshalter (1) überlappen.

3. Elektromotor nach einem der vorhergehenden Ansprüche, **dadurch gekennzeichnet, dass** die Nase Stege (6, 7) und wenigstens eine Durchtrittsöffnung (8) aufweist.

4. Elektromotor nach einem der vorhergehenden Ansprüche, **dadurch gekennzeichnet, dass** das Blatt (4) in einem mittleren, die Nase (2) aufweisenden Bereich (4.1) dicker ist als in seinen Randbereichen (4.2).

5. Elektromotor nach Anspruch 4, **dadurch gekennzeichnet, dass** das Blatt (4) in seinen Randbereichen (4.2) eine kontinuierlich abnehmende Dicke aufweist.

6. Elektromotor nach Anspruch 4 oder 5, **dadurch gekennzeichnet, dass** das Blatt (4) eine Dicke zwischen 0,1 mm und 1 mm aufweist.

7. Elektromotor nach einem der vorhergehenden Ansprüche, **dadurch gekennzeichnet, dass** die Wicklungsköpfe (11) und die Abstandshalter (1) von einer Vergussmasse umhüllt sind.

8. Elektromotor nach Anspruch 7, **dadurch gekennzeichnet, dass** die Vergussmasse die Nasen (2) so umhüllt, dass Bereiche zwischen den Stegen (6, 7) sowie die Durchtrittsöffnungen (8) der Nasen (2) mit Vergussmasse gefüllt sind.

## Claims

1. Electric motor with an iron core, the cogs (9) of which are surrounded by coils (10), the winding heads (11) of which protrude out of the iron core, comprising:
a spacer (1) with an elastic nose-piece (2) with a free end (3) for the mechanical stabilization and electrical insulation of the winding heads (11),
wherein a flat, electrically insulated sheet (4) is formed on the end of the nose-piece (2) located opposite to the free end (3), wherein the nose-piece (2) is pressed through the openings (12) formed by the winding heads (11) and the cogs (9), **characterized in that** the winding heads (11) are respectively covered by the sheet (4) of the pressed-in spacer (1) leading up to an air gap of the electric motor and that the nose-piece (2) has a protruding elastic flap (5).

2. Electric motor according to claim 1, **characterized in that** the sheets (4) of two adjacent spacers (1) overlap.

3. Electric motor according to any one of the preceding claims, **characterized in that** the nose-piece has bars (6, 7) and at least one opening (8).

4. Electric motor according to any one of the preceding claims, **characterized in that** the sheet (4) is thicker in a middle area (4.1) with the nose-piece (2) than at its peripheral areas (4.2)

5. Electric motor according to Claim 4, **characterized in that** the sheet (4) has a continuously decreasing thickness in its peripheral areas (4.2).

6. Electric motor according to Claim 4 or 5, **characterized in that** the sheet (4) has a thickness between 0.1 mm and 1 mm.

7. Electric motor according to any one of the preceding claims, **characterized in that** the winding heads (11) and the spacers (1) are covered by a casting compound.

8. Electric motor according to Claim 7, **characterized in that** the casting compound covers the nose-pieces (2) in such a way that the areas between the bars (6, 7) as well as the openings (8) of the nose-pieces (2) are filled with casting compound,

## Revendications

1. Moteur électrique doté d'une âme en fer dont les dents (9) sont entourées par des bobines (10) dont les têtes d'enroulement (11) débordent latéralement hors de l'âme en fer, et présentant
un écarteur (1) doté d'un bec élastique (2) doté d'une extrémité libre (3) qui stabilise mécaniquement et isole électriquement les têtes d'enroulement (11),
une feuille plate (4) électriquement isolante formée sur une extrémité du bec (2) située face à l'extrémité libre (3),
les becs étant enfoncés dans les ouvertures (12) formées par les têtes d'enroulement (11) et les dents (9),
**caractérisé en ce que**
chacune des têtes d'enroulement (11) est recouverte par la feuille (4) de l'écarteur (1) enfoncée en direction de l'entrefer du moteur électrique et
**en ce que** le bec (2) présente une patte élastique (5) en débord.

2. Moteur électrique selon la revendication 1, **caractérisé en ce que** les feuilles (4) recouvrent deux écarteurs voisins (1).

3. Moteur électrique selon l'une des revendications précédentes, **caractérisé en ce que** le bec présente des nervures (6, 7) et au moins une perforation (8).

4. Moteur électrique selon l'une des revendications précédentes, **caractérisé en ce que** la feuille (4) est plus épaisse dans une partie centrale (4.1) qui présente le bec (2) que dans ses parties de bord (4.2).

5. Moteur électrique selon la revendication 4, **caractérisé en ce que** la feuille (4) présente une épaisseur qui diminue de manière continue dans ses parties de bord (4.2),

6. Moteur électrique selon les revendications 4 ou 5, **caractérisé en ce que** la feuille (4) présente une épaisseur comprise entre 0,1 mm et 1 mm.

7. Moteur électrique selon l'une des revendications précédentes, **caractérisé en ce que** les têtes d'enroulement (11) et les écarteurs (1) sont englobées dans une pâte de coulée.

8. Moteur électrique selon la revendication 7, **caractérisé en ce que** la pâte de coulée englobe les becs (2) de telle sorte que les parties situées entre les nervures (6, 7) et les perforations (8) des becs (2) soient remplies de la pâte de coulée.
